Europäisches Patentamt

European Patent Office

Office européen des brevets

(11) Veröffentlichungsnummer: **0 427 931 A1**

# EUROPÄISCHE PATENTANMELDUNG

(21) Anmeldenummer: 90116869.0

(22) Anmeldetag: 03.09.90

(51) Int. Cl.5: **B65G 65/36**

(30) Priorität: 13.11.89 DE 3937683

(43) Veröffentlichungstag der Anmeldung:
22.05.91 Patentblatt 91/21

(84) Benannte Vertragsstaaten:
AT BE CH DE DK ES FR GB GR IT LI LU NL SE

(71) Anmelder: VEBA KRAFTWERKE RUHR
AKTIENGESELLSCHAFT
Postfach 10 01 25
W-4650 Gelsenkirchen(DE)

(72) Erfinder: **Hanowski, Klemens, Ing.**
**Hans-Pfitzner-Strasse 3**
**W-4270 Dorsten 1(DE)**

(74) Vertreter: **Cohausz & Florack Patentanwälte**
**Postfach 14 01 61 Schumannstrasse 97**
**W-4000 Düsseldorf 1(DE)**

(54) **Vorrichtung zum Entleeren von Schüttgut enthaltenden Silos.**

(57) Die Erfindung betrifft Vorrichtung zum kontinuierlichen Entleeren eines fließ oder rieselfähiges Schüttgut enthaltenden Silos, bestehend aus einer um eine im Silo angeordnete Mittelsäule drehbaren sowie heb- und senkbaren Fördereinrichtung mit an einem Auslegearm gelagerter, von der Mittelsäule bis zur Silowand radial sich erstreckender Förderschnecke und Mitteln zum Ausfördern des durch die Förderschnecke von der Schüttgutoberfläche abtransportierten Schüttgutanteils aus dem Silo. Kennzeichen der Erfindung ist, daß das Mittel zum Ausfördern von Schüttgut (3) aus dem Silo (1) ein vertikaler mechanischer Förderer (8), z.B. ein Becherwerk oder eine Förderschnecke, innerhalb der mit Öffnungen (14) versehenen Mittelsäule (4) ist.

## VORRICHTUNG ZUM ENTLEEREN VON SCHÜTTGUT ENTHALTENDEN SILOS

Die Erfindung betrifft eine Vorrichtung zum kontinuierlichen Entleeren eines fließ- oder rieselfähiges Schüttgut enthaltenden Silos- bestehend aus einer um eine im Silo angeordnete Mittelsäule drehbaren sowie heb- und senkbaren Fördereinrichtung mit an einem Auslegearm gelagerter, von der Mittelsäule bis zur Silowand radial sich erstreckender Förderschnecke und Mitteln zum Ausfördern des durch die Förderschnecke von der Schüttgutoberfläche abtransportierten Schüttgutanteils aus dem Silo.

Eine derartige Vorrichtung ist aus der EP-PS 0 108 196 bekannt. Diese bekannte Vorrichtung hat einen auf der Oberfläche des eingelagerten Schüttguts bewegbaren Förderer in Form von Förderschnecken zum Fördern von oberflächig abgekratztem oder abgeschaltem Schüttgut zu einer im Siloboden vorgesehenen Austragsöffnung. Das Schüttgut wird dabei durch Öffnungen in der Wand einer zentralen Mittelsäule durch dessen Hohlraum zur unteren Austragsöffnung gefördert.

Diese bekannte Austragsvorrichtung hat den Nachteil, daß für die untere Austragung ein Tunnel unter dem Silo vorgesehen werden muß, der baulich kompliziert und teuer ist. An der bekannten Vorrichtung ist ferner nachteilige, daß die untere Austragsöffnung in der Mittelsäule nicht oder schlecht zugänglich ist, so daß bei einer Verstopfung ein Freimachen der Austragsöffnung nicht möglich ist oder erschwert wird.

In der DE-P 3928115.9 ist bei einer gattungsgemäßen Vorrichtung vorgeschlagen worden, daß das Mittel zum Ausfördern von Schüttgut aus dem Silo ein Saugrohr ist, das mit seiner im Bereich der Förderschnecke endenden Saugöffnung höhenverstellbar ist und mit seiner entgegengesetzten Öffnung an die Saugseite einer Förderpumpe angeschlossen ist. Dabei kann das Saugrohr einen teleskopierbaren Saugrüssel aufweisen, dessen Ende am Auslegearm für die Förderschnecke befestigt ist. Diese Schüttgutaustragvorrichtung ermöglicht ein einwandfreies störungsarmes Austragen von Schüttgut aus einem Silo, weil sie oberhalb der Schüttgutoberfläche angeordnet und daher jederzeit gut zugänglich ist. Der Austrag kann kontinuierlich und gut dosierbar durch Einstellen der Saugkraft der Förderpumpe geregelt werden. Das Saugrohr, das auch schlauchförmig sein kann, wird zweckmäßigerweise am Auslagerarm befestigt, an dem die Förderschnecke drehbar gelagert ist. Es läßt sich mit dem Auslegearm um den zentralen Dorn drehen sowie längs desselben heben und senken.

Der Erfindung liegt die Aufgabe zugrunde, eine Schüttgutaustragvorrichtung zu schaffen, mit der auf noch einfachere Weise ein sicheres und störungsfreies gut dosierbares Austragen von Schüttgut aus einem Silo ermöglicht wird.

Zur Lösung dieser Aufgabe wird bei der gattungsgemäßen Vorrichtung vorgeschlagen, daß das Mittel zum Ausfördern von Schüttgut aus dem Silo ein vertikaler mechanischer Förderer, z.B. ein Becherwerk oder eine Förderschnecke, innerhalb der mit Öffnungen versehenen Mittelsäule ist. Gemäß einer bevorzugten Ausgestaltung der Erfindung ist zum Befüllen des Silos vorgesehen, daß ein teleskopierbarer Rüssel, am mittigen Ende der Förderschnecke am Auslegerarm mündend, befestigt ist.

Durch die erfindungsgemäße Schüttgutaustragvorrichtung wird erreicht, daß ein baulich sehr komplizierter Tunnel unter dem Silo zur Aufnahme der Austragapparate entfallen kann. Die geschlossene Bauweise der Fördervorrichtung erlaubt eine Begehbarkeit des Innenraumes der Mittelsäule, um eventuell auftretende Störungen einfach und schnell beseitigen zu können.

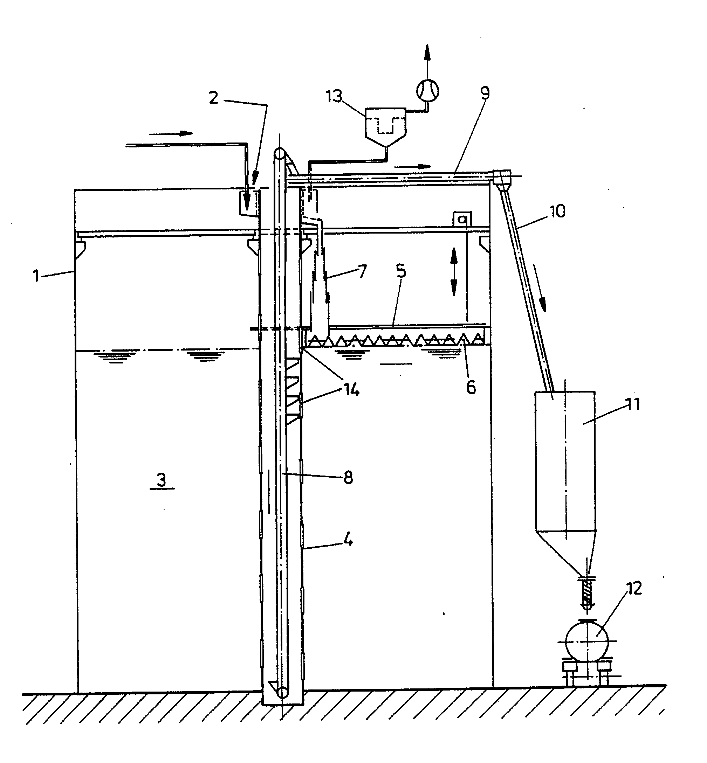

In der Zeichnung ist die erfindungsgemäße Schüttgutförder-Vorrichtung schematisch dargestellt.

Im Silo (1) sind die Eintragöffnung (2) für das Schüttgut (3), die Mittelsäule (4), ein um diese drehbarer sowie heb- und senkbarer radialer Auslegerarm (5), an die die Förderschnecke (6) um eine horizontale Achse drehbar gelagert ist, angeordnet. Am Auslegerarm (5) ist ferner der teleskopierbare Rüssel (7) zum Befüllen des Silos (1) befestigt, dessen Ausgang am mittigen Ende der Förderschnecke (6) liegt.

Beim Entleeren des Silos (1) fördert die Förderschnecke (6) das Schüttgut (3) durch Öffnungen (14) in die Mittelsäule (4). Das Schüttgut wird in dieser Mittelsäule mit dem mechanischen Becherwerk (8) nach oben transportiert, auf ein weiteres, mechanisches, horizontal angeordnetes Fördergerät (9), z.B. Trogkettenförderer oder Schneckenförderer, gegeben, welches das Schüttgut (3) über eine Fallschurre (19) einem Verladeturm (11) zuführt, aus dem ein Fahrzeug (12) befüllt wird.

Anfallende Förderluft wird über eine Filteranlage (13) ins Freie geblasen.

## Ansprüche

1. Vorrichtung zum kontinuierlichen Entleeren eines fließ-oder rieselfähiges Schüttgut enthaltenden Silos, bestehend aus einer um eine im Silo angeordnete Mittelsäule drehbaren sowie heb- und senkbaren Fördereinrichtung mit an einem Auslegearm gelagerter, von der Mittelsäule bis zur Silowand radial sich erstreckender Förderschnecke und Mitteln zum Ausfördern des durch die Förderschnecke von der Schüttgutoberfläche abtransportierten Schüttgutanteils aus dem Silo, **dadurch gekennzeichnet,** daß das Mittel zum Ausfördern von Schüttgut (3) aus dem Silo (1) ein vertikaler mechanischer Förderer (8) innerhalb der mit Öffnungen (14) versehenen Mittelsäule (4) ist.

2. Vorrichtung nach Anspruch 1, mit Mitteln zum Befüllen des Silos, **dadurch gekennzeichnet,** daß ein teleskopierbarer Rüssel (7), am mittigen Ende der Förderschnecke (6) am Auslegerarm (5) mündend, befestigt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | NL-A-7 009 882 (N.V. MACHINEFABRIK SPAANS) <br> * Insgesamt * <br> --- | 1,2 | B 65 G 65/36 |
| Y | EP-A-0 163 337 (DE WIT) <br> * Figuren * <br> --- | 1,2 | |
| Y | FR-A-2 535 374 (DUBROEUCQ) <br> * Seite 6, Zeilen 1-28; Figuren * <br> --- | 1,2 | |
| X | US-A-2 649 215 (DICKSON) <br> * Insgesamt * <br> --- | 1 | |
| X | MECHANICAL HANDLING, Band 41, Nr. 3, März 1954, Seiten 115-121; "Bulk sugar handling" <br> * Seite 120: "Machinery"; Figur auf Seite 119 * <br> ----- | 1 | |

| | RECHERCHIERTE SACHGEBIETE (Int. Cl.5) |
|---|---|
| | B 65 G |

Der vorliegende Recherchenbericht wurde für alle Patentansprüche erstellt

| Recherchenort | Abschlußdatum der Recherche | Prüfer |
|---|---|---|
| DEN HAAG | 07-02-1991 | OSTYN T.J.M. |